# EUROPÄISCHE PATENTANMELDUNG

(11) **EP 1 772 672 A1**
(43) Veröffentlichungstag der Anmeldung: **11.04.2007**
(21) Anmeldenummer: 05021971.6
(22) Anmeldetag: 05.10.2005
(51) Int. Cl.: F23J 11/12, F27D 17/00, E04H 12/28, C21C 5/38

(54) **Vorrichtung zur Abkühlung von Abgasen**

(71) Anmelder: OSCHATZ GMBH, 45143 Essen (DE)
(72) Erfinder: Hüning, Herbert, 46348 Raesfeld (DE)
(74) Vertreter: Rohmann, Michael

(57) **Zusammenfassung**

Vorrichtung zur Abkühlung von Abgasen, insbesondere zur Abkühlung von Abgasen aus einem Schmelzreduktionsofen zur Eisenherstellung. Es ist ein Ofen (1) vorgesehen, aus dem die Abgase austreten und im oberen Bereich (2) des Ofens ist ein Abgaskanal (3) angeschlossen. Der Abgaskanal wird durch ein Kühlmedium gekühlt, das eine Temperatur T₁ aufweist. Der Abgaskanal ist über Abstützungselemente (8) an einem Untergrund abgestützt und die Abstützungselemente sind mit einem Medium erwärmt.

## Beschreibung

Die Erfindung betrifft eine Vorrichtung zur Abkühlung von Abgasen, insbesondere zur Abkühlung von Abgasen aus einem Schmelzreduktionsofen zur Roheisenherstellung, wobei ein Ofen vorgesehen ist, aus dem die Abgase austreten und wobei im oberen Bereich des Ofens ein Abgaskanal zur Abführung und Kühlung der Abgase angeschlossen ist. - In dem Ofen der erfindungsgemäßen Vorrichtung werden insbesondere Abgase mit höherem Gasdruck produziert, die unter Überdruck in den Abgaskanal gelangen. Hier herrscht beispielsweise ein Druck von etwa 0,8 bar über Atmosphärendruck. In dem gasdichten und gekühlten Abgaskanal werden die Abgase zweckmäßigerweise auf eine Temperatur abgekühlt, die zum Beispiel für die Vorwärmung von Erz geeignet ist. Das in den Abgaskanal eintretende Abgas hat beispielsweise eine hohe Temperatur von ca. 1.450°C und die Kühlung des Abgaskanales erfolgt dann mit einem Kühlmedium, insbesondere mit Siedewasser mit einer Temperatur von beispielsweise 260°C.

Aus der Praxis sind bereits Vorrichtungen der eingangs genannten Art bekannt, bei denen der Abgaskanal mit entsprechenden Abstützungselementen an einem Untergrund abgestützt wird. Bei den Abstützungselementen handelt es sich um massive Stahlträger. Diese Abstützungselemente stützen sich normalerweise auf verschiedenen Ebenen bzw. Lasteinleitungsebenen mittels Federelementen ab. Aufgrund der höheren Temperatur des mit dem Kühlmedium (Wasserdampf) beaufschlagten Abgaskanals kommt es bei der Inbetriebnahme der Vorrichtung zu Wärmedehnungen von Abgaskanalabschnitten, die relativ zu anderen Vorrichtungskomponenten erfolgen, insbesondere relativ zu einem Anschlussstutzen des Ofens. Es treten normalerweise Dehnungen in vertikaler Richtung und auch in horizontaler Richtung auf. Zum Ausgleich von Differenzdehnungen sind entsprechende zwischen die Anlagenbauteile geschaltete aufwendige Kompensatoren erforderlich. Ein zusätzliches Problem ergibt sich, wenn mit Gasüberdruck im Abgaskanal gearbeitet wird. Dadurch werden Anlagenelemente gleichsam auseinandergedrückt. Dementsprechend müssen die Kompensatoren bzw. Kompensatorbauteile ausgelegt sein. Ein solcher Kompensator muss in der Regel Relativbewegungen in verschiedenen Raumrichtungen ausgleichen können. Diese aus dem Stand der Technik bekannten Maßnahmen sind relativ aufwendig und kostspielig.

Demgegenüber liegt der Erfindung das technische Problem zugrunde, eine Vorrichtung der eingangs genannten Art anzugeben, mit der die auftretenden Wärmedehnungen auf effektive und zugleich einfache und wenig aufwendige Weise kompensiert bzw. gleichsam neutralisiert werden können.

Zur Lösung dieses technischen Problems lehrt die Erfindung eine Vorrichtung zur Abkühlung von Abgasen, insbesondere zur Abkühlung von Abgasen aus einem Schmelzreduktionsofen zur Roheisenherstellung, wobei ein Ofen vorgesehen ist, aus dem die Abgase austreten und wobei im oberen Bereich des Ofens ein Abgaskanal zur Abführung und Kühlung der Abgase angeschlossen ist,
wobei der Abgaskanal durch ein Kühlmedium gekühlt wird, welches Kühlmedium eine Temperatur T₁ aufweist,
wobei der Abgaskanal über Abstützungselemente an einem Untergrund abgestützt ist und wobei die Abstützungselemente mit einem Medium erwärmt werden.

Die Temperatur T₁ bezieht sich auf die Temperatur des dem Abgaskanal zugeführten Kühlmediums. Die Temperatur T₁ ist höher bzw. wesentlich höher als Raumtemperatur. Deshalb finden bei Inbetriebnahme der Anlage entsprechende Wärmedehnungen statt. Zur Kühlung des Abgaskanals wird das Kühlmedium zweckmäßigerweise durch entsprechende Kühlrohre an der Wandung des Abgaskanals geleitet. Gemäß einer Ausführungsform der Erfindung wird die Wandung bzw. die Primärwandung des Abgaskanals durch die Kühlrohre gebildet. An diese Primärwandung kann sich insbesondere eine äußere Isolierschicht anschließen.

Bei den Abstützungselementen handelt es sich zweckmäßigerweise um linear ausgebildete bzw. im Wesentlichen linear ausgebildete Abstützungselemente. Es liegt im Rahmen der Erfindung, dass die Abstützungselemente vertikal bzw. im Wesentlichen vertikal orientiert sind. Vertikale Orientierung bezieht sich dabei nach einer Ausführungsform auf den Ruhezustand der Vorrichtung, d.h. wenn die Vorrichtung außer Betrieb ist. Wie weiter unten dargelegt, können die vertikalen Abstützungselemente bzw. die Vertikalstützen im Betrieb der Anlage aus ihrer vertikalen Orientierung in eine Schräglage ausgelenkt werden. Es liegt aber auch im Rahmen der Erfindung, dass die Abstützungselemente bzw. die Vertikalstützen im Ruhezustand der Vorrichtung in einer Schräglage angeordnet sind und dass diese Abstützungselemente bzw. diese Vertikalstützen dann im Betrieb der Vorrichtung in die vertikale Orientierung ausgelenkt werden.

Eine wesentliche Ausführungsform der Erfindung ist dadurch gekennzeichnet, dass das in den Abgaskanal gelangende Abgas unter Überdruck steht. Der Gasinnendruck des Abgaskanals beträgt zweckmäßigerweise 0,6 bis 1,0 bar über Atmosphärendruck, vorzugsweise 0,7 bis 0,9 bar über Atmosphärendruck und bevorzugt etwa 0,8 bar über Atmosphärendruck. Das in den Abgaskanal eindringende Abgas hat in der Regel eine Gastemperatur von 1.200 bis 1.600°C, vorzugsweise von 1.300 bis 1.500°C und bevorzugt eine Gastemperatur von etwa 1.450°C. Die erfindungsgemäße Vorrichtung eignet sich in vorteilhafter Weise für einen Betrieb mit Abgasüberdruck im Abgaskanal.

Es liegt im Rahmen der Erfindung, dass sich die Abstützungselemente mit ihren unteren Enden auf derselben Ebene bzw. auf derselben Lasteinleitungsebene abstützen. Mit anderen Worten liegen die unteren Enden der Abstützungselemente in ein und derselben Ebene bzw. Lasteinleitungsebene. Die unteren Enden der Abstützungselemente können sich dabei auf einer Stahlkonstruktion abstützen, deren Elemente zweckmäßigerweise die Lasteinleitungsebene bilden bzw. definieren. Es liegt im Rahmen der Erfindung, dass die erfindungsgemäße Lasteinleitungsebene horizontal ausgerichtet ist. Es liegt auch im Rahmen der Erfindung, dass sich der Ofen mit seinem Eigengewicht auf bzw. an der Lasteinleitungsebene abstützt. Nach einer anderen Ausführungsform kann sich der Ofen auch auf einem geeigneten Fundament abstützen.

Zweckmäßigerweise hat das Kühlmedium für den Abgaskanal eine Temperatur T₁ von über 150°C und bevorzugt von über 200°C. Nach sehr bevorzugter Ausführungsform der Erfindung weist das Kühlmedium für den Abgaskanal eine Temperatur T₁ von 220 bis 280°C und insbesondere eine Temperatur von 240 bis 280°C auf. Eine Ausführungsvariante der Erfindung ist dadurch gekennzeichnet, dass die Temperatur T₁ des Kühlmediums 250 bis 270°C und insbesondere etwa 260°C beträgt.

Es liegt im Rahmen der Erfindung, dass das Kühlmedium durch Kühlrohre geleitet wird, die den Mantel des Abgaskanals bilden. Nach besonders bevorzugter Ausführungsform der Erfindung ist das Kühlmedium Siedewasser mit einer Temperatur T₁ von mehr als 150°C, vorzugsweise von mehr als 200°C und bevorzugt von mehr als 240°C. Gemäß dieser Ausführungsform der Erfindung findet also eine Verdampfungskühlung des Abgaskanals statt.

Es liegt weiterhin im Rahmen der Erfindung, dass das Medium zur Erwärmung der Abstützungselemente ebenfalls die Temperatur T₁ aufweist oder im Wesentlichen die Temperatur T₁ aufweist (die das Kühlmedium für den Abgaskanal hat). Sehr bevorzugt ist im Rahmen der Erfindung eine Ausführungsvariante, bei der das Kühlmedium, das zur Kühlung des Abgaskanals eingesetzt wird und das vorzugsweise Siedewasser ist, auch als Medium zur Erwärmung der Abstützungselemente verwendet wird. Dann entspricht also das Medium zur Erwärmung der Abstützungselemente dem Kühlmedium zur Kühlung des Abgaskanals.

Nach besonders bevorzugter Ausführungsform der Erfindung sind die Abstützungselemente Hohlprofile, die von dem Medium durchströmt werden. Bei den Abstützungselementen kann es sich insbesondere um Rohre handeln, durch die das Medium mit der Temperatur T₁ strömt. Zweckmäßigerweise strömt durch diese Hohlprofile Siedewasser mit einer Temperatur von etwa 260°C, wenn auch das Kühlmedium für den Abgaskanal eine Temperatur T₁ von 260°C oder von etwa 260°C aufweist. Mit der Temperatur T₁ des Mediums für die Abstützungselemente ist ebenfalls die Temperatur des den Abstützungselementen zugeführten Mediums gemeint.

Es liegt im Rahmen der Erfindung, dass die Abstützungselemente als Pendelstützen bzw. als vertikale Pendelstützen ausgebildet sind. Zweckmäßigerweise ist ein Abstützungselement mit seinem einen Ende über eine Gelenkverbindung an den Abgaskanal angeschlossen und mit seinem anderen Ende über eine Gelenkverbindung an die Lasteinleitungsebene angeschlossen. Durch diese erfindungsgemäße Ausbildung der Abstützungselemente als Pendelstützen können horizontale Dehnungen bzw. horizontale Wärmedehnungen der Vorrichtungselemente bzw. der Abgaskanalabschnitte aufgenommen werden. Dabei kann eine an den Abgaskanal angeschlossene Pendelstütze bei entsprechender horizontaler Dehnungsbeaufschlagung seitlich verschwenken. Auf diese Weise werden Zwänge in horizontaler Richtung effektiv vermieden. Die Erfindung arbeitet also nach sehr bevorzugter Ausführungsform mit als gekühlte Pendelstützen ausgebildeten Abstützungselementen, durch die Medium mit der Temperatur T₁ geleitet wird.

Nach einer Ausführungsvariante der Erfindung können die Abstützungselemente jeweils über ein Federelement auf der Lasteinleitungsebene abgestützt sein. Bei einem solchen Federelement handelt es sich zweckmäßigerweise um eine Tellerfeder.

Es liegt im Rahmen der Erfindung, dass die vertikale Höhe der Lasteinleitungsebene nach Maßgabe der Temperaturdifferenz zwischen Ofen und Abgaskanal festgelegt ist. Bei dieser Temperaturdifferenz handelt es sich insbesondere um die Differenz zwischen der Temperatur T₁ des Kühlmediums für den Abgaskanal bzw. für die Abstützelemente und der Temperatur T₂ des Kühlmediums für die Kühlung der Ofenwände bzw. der Ofeninnenwände. Die Ofenwände, insbesondere im oberen Ofenteil, an den der Abgaskanal anschließt, werden mit einem Kühlmedium gekühlt, wobei dieses Kühlmedium eine Temperatur T₂ aufweist, die in der Regel niedriger bzw. wesentlich niedriger liegt als die Temperatur T₁ des Kühlmediums für den Abgaskanal. Das Kühlmedium mit der Temperatur T₂ wird zweckmäßigerweise ebenfalls durch Kühlrohre geleitet, die an den Ofenwänden vorhanden sind. Die Temperatur T₂ bezieht sich auf die Temperatur des dem Ofen bzw. den Kühlrohren für den Ofen zugeführten Kühlmediums. Die Kühlung der Wände bzw. Innenwände des Ofens erfolgt beispielsweise mit Kühlmedium einer Temperatur T₂ von 80°C, während die Kühlung des Abgaskanals und der Abstützungselemente beispielsweise mit Kühlmedium bzw. Medium einer Temperatur von 260°C erfolgt. Dadurch ergeben sich unterschiedliche vertikale Wärmedehnungen am Ofen einerseits und am Abgaskanal bzw. an den Abstützelementen andererseits. Mit anderen Worten ist die vertikale Längenausdehnung (in mm) der genannten Anlagenkomponenten bei 80°C und bei 260°C unterschiedlich. Der Ofen bzw. der obere Ofenabschnitt besteht dabei in der Regel aus dem gleichen Material bzw. im Wesentlichen aus dem gleichen Material wie der an den Ofen anschließende Abgaskanalabschnitt und die Abstützelemente. Vorzugsweise bestehen diese Anlagenkomponenten aus Stahl oder im Wesentlichen aus Stahl. Um die vorgenannte Differenz zu kompensieren wird nun erfindungsgemäß die Lasteinleitungsebene für die gekühlten Abstützungselemente angehoben und zwar in Abhängigkeit von der Temperaturdifferenz bzw. von der Differenz der Ausdehnungskoeffizienten. Die Abstützungselemente bzw. die Vertikalstützen werden dadurch also gleichsam verkürzt. Diese Maßnahme hat sich als besonders effektiv bewährt und die unterschiedliche vertikale Ausdehnung von Ofen und Abgaskanal bzw. Abstützelementen kann dadurch funktionssicher neutralisiert werden. Die Lasteinleitungsebene definiert den ideellen Festpunkt in vertikaler Richtung der horizontale Festpunkt ist frei wählbar und wird erfindungsgemäß vorzugsweise auf die Mittelachse des Ofengefäßes gelegt.

Der erfindungsgemäße Abgaskanal ist zweckmäßigerweise so ausgeführt, dass an den oberen Bereich des Ofens zunächst ein horizontaler Abgaskanalabschnitt bzw. ein etwas geneigter und im Wesentlichen horizontaler Abgaskanalabschnitt anschließt. An diesen horizontalen bzw. geneigten Abgaskanalabschnitt schließt ein vertikaler Abgaskanalabschnitt an, so dass das Abgas darin vertikal nach oben geleitet wird. Das Abgas wird am oberen Ende dieses ersten vertikalen Abgaskanalabschnitts über einen Umlenkabschnitt in einen zweiten vertikalen Abgasabschnitt eingeleitet, durch den das Abgas wieder nach unten geleitet wird. Der Abgaskanalabschnitt hat also nach bevorzugter Ausführungsform der Erfindung die Form eines umgekehrten Us mit daran angeschlossenem horizontalem bzw. geneigtem Abgaskanalabschnitt, der die Verbindung zum oberen Teil des Ofens herstellt.

Der Erfindung liegt die Erkenntnis zugrunde, dass aufgrund der erfindungsgemäßen Ausgestaltung der Vorrichtung unterschiedliche relative Wärmedehnungen von Vorrichtungskomponenten effektiv und funktionssicher vermieden werden können. Das gilt auch bei Abgasüberdrucken im Abgaskanal, die bei der erfindungsgemäßen Vorrichtung in der Regel vorliegen. Solche höheren Gasdrücke stellen bei den aus dem Stand der Technik bekannten Vorrichtungen ein erhebliches Problem dar, das jedoch durch die erfindungsgemäße Vorrichtung wirksam gelöst werden kann. Der Erfindung liegt insoweit die Erkenntnis zugrunde, dass eine Erwärmung der vertikalen Abstützungselemente des Abgaskanals, insbesondere eine Erwärmung mit derselben Temperatur wie die Kühlung des Abgaskanals zu einer überraschend funktionssicheren und effektiven Lösung des erfindungsgemäßen technischen Problems führt. Dabei liegt es im Rahmen der Erfindung, dass sich die Abstützungselemente des Abgaskanals auf derselben Lasteinleitungsebene abstützen. Der Erfindung liegt weiterhin die Erkenntnis zugrunde, dass störende unterschiedliche Wärmedehnungen besonders wirksam vermieden werden können, wenn die vertikale Höhe der Lasteinleitungsebene nach Maßgabe der Temperaturdifferenz zwischen Ofenkühlung und Abgaskanalkühlung bzw. Abstützungselementkühlung festgelegt wird. Der Erfindung liegt außerdem die Erkenntnis zugrunde, dass zusätzlich horizontale Wärmedehnungen effektiv aufgenommen bzw. ausgeglichen werden können, wenn die Abstützungselemente als gelenkig angeschlossene Pendelstützen ausgeführt sind. Aufgrund der erfindungsgemäßen Ausgestaltung der Vorrichtung kann auf aufwendige Kompensatoren bzw. auf eine aufwendige Ausgestaltung von Übergangsbereichen zwischen den Anlagenkomponenten verzichtet werden. Aufwendige Kompensationslösungen, die vor allem bei höheren Gasdrücken im Abgaskanal komplex und kompliziert sind, können vermieden werden. Insoweit zeichnet sich die erfindungsgemäße Vorrichtung durch einen einfacheren und weniger aufwendigen Aufbau gegenüber den aus dem Stand der Technik bekannten Vorrichtungen aus. Eine erfindungsgemäße Vorrichtung ist deshalb auch kostengünstiger herstellbar als die bislang aus dem Stand der Technik bekannten Vorrichtungen dieser Art.

Nachfolgend wird die Erfindung anhand einer lediglich ein Ausführungsbeispiel darstellenden Zeichnung näher erläutert. Es zeigen in schematischer Darstellung:
- Fig. 1: eine Seitenansicht einer erfindungsgemäßen Vorrichtung und
- Fig. 2: den Gegenstand gemäß Fig. 1 ausschnittsweise.

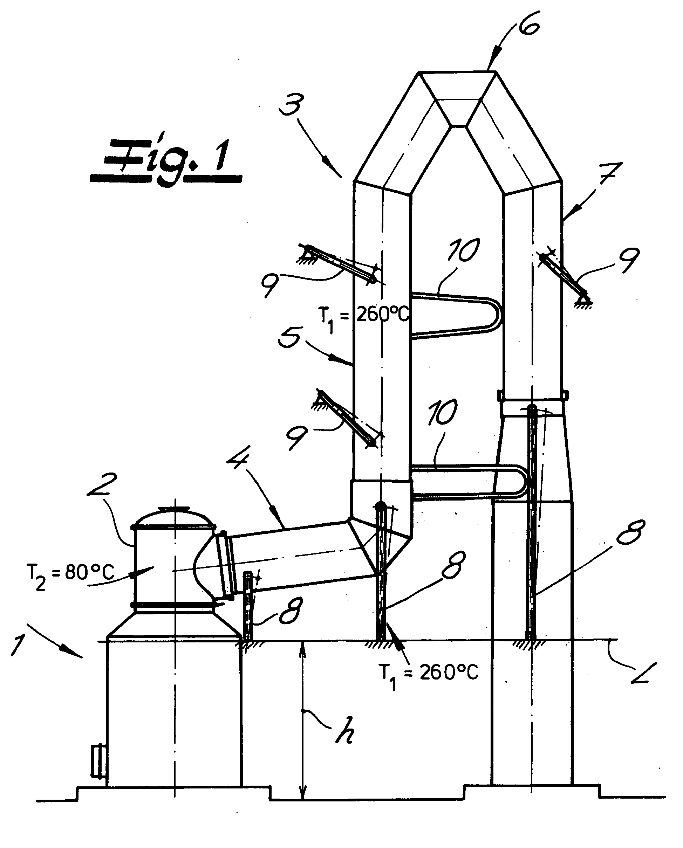

In Fig. 1 ist eine Vorrichtung zur Abkühlung von Abgasen, insbesondere zur Abkühlung von Abgasen aus einem Schmelzreduktionsofen zur Roheisenherstellung dargestellt. Die Vorrichtung weist einen Ofen 1 auf, aus dem die Abgase austreten und im oberen Bereich 2 des Ofens ist ein Abgaskanal 3 zur Abführung und Kühlung der Abgase angeschlossen. Die Abgase werden in dem gasdichten und gekühlten Abgaskanal 3 auf eine Temperatur abgekühlt, die beispielsweise für die Vorwärmung von Erzen geeignet ist. Die weitere Abführung der abgekühlten Abgase aus dem Abgaskanal 3 ist in den Figuren nicht näher dargestellt.

Im Ausführungsbeispiel gemäß Fig. 1 schließt an den oberen Bereich 2 des Ofens 1 zunächst ein horizontaler bzw. leicht geneigter Abgaskanalabschnitt 4 an. Dieser Abgaskanalabschnitt 4 geht in einen ersten vertikalen Abgaskanalabschnitt 5 über. Das Abgas strömt dann über einen Umlenkungsabschnitt 6 in einen zweiten vertikalen Abgaskanalabschnitt 7, in dem es wieder nach unten geleitet wird. Der Abgaskanal 3 hat also die Form eines umgekehrten Us mit daran angeschlossenem horizontalen Abgaskanalabschnitt 4, der die Verbindung zum oberen Bereich 2 des Ofens 1 herstellt. Die Abgase, die aus dem oberen Bereich 2 des Ofens 1 in den Abgaskanalabschnitt 4 einströmen, mögen eine Temperatur von etwa 1.450°C haben, sowie einen Gasüberdruck von etwa 0,8 bar über Atmosphärendruck.

Die Wandungen des Abgaskanals 3 werden durch ein Kühlmedium gekühlt, das durch nicht dargestellte die Wände des Abgaskanals 3 bildende Kühlrohre geführt wird. Das zugeführte Kühlmedium weist eine Temperatur T₁ auf, die im Ausführungsbeispiel 260°C beträgt. Aufgrund dieser relativ hohen Temperatur T₁ ergeben sich bei Inbetriebnahme der Vorrichtungen wärmebedingte Dehnungen am Abgaskanal. Bei dem Kühlmedium handelt es sich im Übrigen zweckmäßigerweise um Siedewasser. Der Abgaskanal 3 ist über Abstützungselemente bzw. über Vertikalstützen 8 an einem Untergrund abgestützt. Die unteren Enden der Vertikalstützen 8 stützen sich auf ein und derselben horizontalen Lasteinleitungsebene L ab. Die Lasteinleitungsebene L wird zweckmäßigerweise durch eine nicht näher dargestellte Stahlkonstruktion auf dem Erdboden abgestützt. Im Ausführungsbeispiel stützt sich der Ofen 1 ebenfalls auf dem Erdboden bzw. auf einem geeigneten Fundament ab.

Es liegt im Rahmen der Erfindung, dass die Vertikalstützen 8 durch ein Medium erwärmt werden, das im Ausführungsbeispiel dieselbe Temperatur T₁ wie das Kühlmedium für den Abgaskanal 3 aufweist. Mit anderen Worten werden die Vertikalstützen 8 mittels eines Mediums mit einer Temperatur T₁ von 260°C erwärmt. Vorzugsweise handelt es sich auch bei diesem Medium um Siedewasser. Die Vertikalstützen 8 sind vorzugsweise als Hohlprofile und im Ausführungsbeispiel als Rohre ausgebildet, durch die das Medium mit der Temperatur T₁ geleitet wird. Dadurch, dass die Vertikalstützen 8 erfindungsgemäß erwärmt werden und dadurch, dass sich die Vertikalstützen 8 auf derselben Lasteinleitungsebene L abstützen, können störende Relativdehnungen von Abgaskanalabschnitten effektiv vermieden werden. Aus diesem Grunde kann in vorteilhafter Weise auf die aus dem Stand der Technik bekannten aufwendigen Kompensatorelemente verzichtet werden.

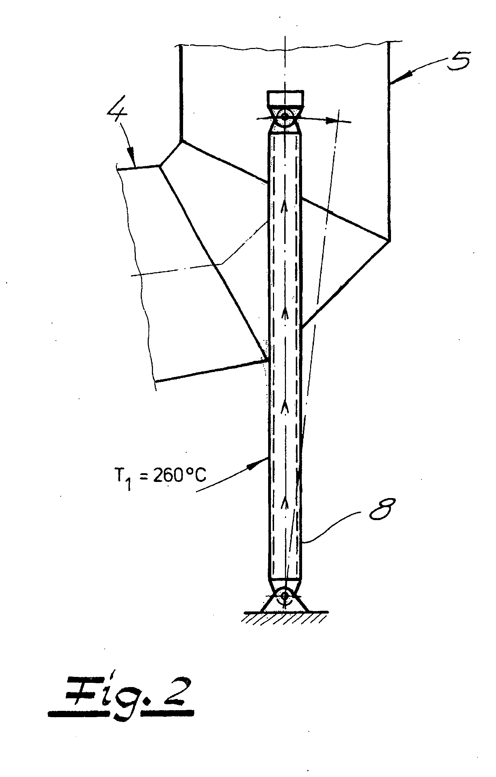

Im Ausführungsbeispiel nach den Figuren ist in der Seitenansicht jeweils nur eine Vertikalstütze 8 dargestellt. Die Vertikalstützen 8 sind aber zweckmäßigerweise an beiden Seiten des Abgaskanals 3 vorhanden. - Nach besonders bevorzugter Ausführungsform der Erfindung sind die Vertikalstützen 8 als Pendelstützen ausgebildet. Dazu sind die Vertikalstützen 8 jeweils mit ihrem oberen Ende gelenkig mit dem Abgaskanal 3 verbunden und mit ihrem unteren Ende gelenkig mit der Lasteinleitungsebene L bzw. mit einer die Lasteinleitungsebene L definierenden Stahlkonstruktion verbunden. Auf diese Weise können störende horizontale Wärmedehnungen effektiv ausgeglichen bzw. kompensiert werden. Das ist in den Fig. 1 und 2 angedeutet worden.

Es liegt im Übrigen im Rahmen der Erfindung, dass die vertikale Höhe h der Lasteinleitungsebene L nach Maßgabe der Differenz zwischen der Temperatur T₁ am Abgaskanal und der Temperatur T₂ am Ofen festgelegt ist. Der obere Bereich 2 des Ofens 1 wird ebenfalls durch ein Kühlmedium gekühlt, das durch nicht näher dargestellte Kühlrohre geführt wird, die an der Innenwandung des Ofens 1 vorhanden sind. Das zugeführte Kühlmedium zur Kühlung dieses oberen Bereichs 2 hat eine Temperatur T₂, die niedriger liegt als die Temperatur T₁ des Kühlmediums für den Abgaskanal 3. Die Temperatur T₂ des Kühlmediums zur Kühlung des oberen Bereichs 2 beträgt im Ausführungsbeispiel 80°C. Die Lasteinleitungsebene L wird also nach Maßgabe der Temperaturdifferenz zwischen Ofen 1 und Abgaskanal 3 bzw. Vertikalstützen 8 angehoben und zwar um die vertikale Höhe h. Dadurch verkürzt sich gleichsam die Länge der Vertikalstützen 8. Auf diese Weise können störende vertikale Relativdehnungen zwischen Ofen 1 und Abgaskanal 3 vermieden werden. Mit anderen Worten liegt die Lasteinleitungsebene L so, als wenn sich der Ofen auch entsprechend einer Temperatur von 260°C vertikal ausdehnen würde.

In Fig. 1 sind im Übrigen Führungsschwingen 9 dargestellt, die an den Abgaskanal 3 gelenkig angeschlossen sind, so dass sie Vertikal- und Horizontaldehnungen des Abgaskanals 3 (bezogen auf den Festpunkt des Gesamtsystems) folgen können. Das wurde in Fig. 1 angedeutet. Im Übrigen sind zwischen den vertikalen Abgaskanalabschnitten 5 und 7 Abstandshalter 10 vorgesehen, die vorzugsweise ebenfalls von dem Kühlmedium mit der Temperatur T₁ (260°C) durchströmt werden. Auch dadurch werden störende Relativdehnungen effektiv vermieden und insbesondere die Parallelität der vertikalen Abgaskanalabschnitte 5 und 7 kann sichergestellt werden.

## Patentansprüche

1. Vorrichtung zur Abkühlung von Abgasen, insbesondere zur Abkühlung von Abgasen aus einem Schmelzreduktionsofen zur Roheisenherstellung,
wobei ein Ofen (1) vorgesehen ist, aus dem die Abgase austreten und wobei im oberen Bereich (2) des Ofens (1) ein Abgaskanal (3) zur Abführung und Kühlung der Abgase angeschlossen ist,
wobei der Abgaskanal (3) durch ein Kühlmedium gekühlt wird, welches Kühlmedium eine Temperatur T₁ aufweist,
wobei der Abgaskanal (3) über Abstützungselemente an einem Untergrund abgestützt ist und wobei die Abstützungselemente mit einem Medium erwärmt werden.

2. Vorrichtung nach Anspruch 1, wobei die Abstützungselemente sich mit ihren unteren Enden auf derselben Lasteinleitungsebene (L) abstützen.

3. Vorrichtung nach einem der Ansprüche 1 oder 2, wobei das Kühlmedium eine Temperatur T₁ von über 150°C und bevorzugt von über 200°C aufweist.

4. Vorrichtung nach einem der Ansprüche 1 bis 3, wobei das Kühlmedium Siedewasser bzw. Wasserdampf mit einer Temperatur T₁ von mehr als 150°C ist.

5. Vorrichtung nach einem der Ansprüche 1 bis 4, wobei das Medium zur Erwärmung der Abstützungselemente ebenfalls die Temperatur T₁ aufweist.

6. Vorrichtung nach einem der Ansprüche 1 bis 5, wobei die Abstützungselemente Hohlprofile sind, die von dem Medium durchströmt werden.

7. Vorrichtung nach einem der Ansprüche 1 bis 6, wobei die Abstützungselemente als Pendelstützen ausgebildet sind.

8. Vorrichtung nach einem der Ansprüche 1 bis 7, wobei die Abstützungselemente jeweils über ein Federelement auf der Lasteinleitungsebene (L) abgestützt sind.

9. Vorrichtung nach einem der Ansprüche 1 bis 8, wobei die Höhe der Lasteinleitungsebene (L) nach Maßgabe einer Temperaturdifferenz zwischen Ofen (1) und Abgaskanal (3) festgelegt ist.

10. Vorrichtung nach einem der Ansprüche 1 bis 9, wobei an den oberen Bereich des Ofens (1) zunächst ein horizontaler Abgaskanalabschnitt (4) anschließt, an den sich wiederum ein vertikaler Abgaskanalabschnitt (5) anschließt.
